(19) Europäisches Patentamt
European Patent Office
Office européen des brevets

(11) Publication number: 0 044 872 B1

(12) EUROPEAN PATENT SPECIFICATION

(45) Date of publication of patent specification: 18.09.85

(51) Int. Cl.[4]: B 01 D 13/00, B 01 D 13/04

(21) Application number: 80901335.2

(22) Date of filing: 21.07.80

(86) International application number: PCT/JP80/00165

(87) International publication number: WO 81/00217 05.02.81 Gazette 81/04

# (54) PROCESS FOR SELECTIVELY SEPARATING WATER-SOLUBLE VALUABLE MATERIALS FROM AN AQUEOUS SOLUTION CONTAINING SAME.

(30) Priority: 20.07.79 JP 91498/79
29.02.80 JP 25555/80

(43) Date of publication of application: 03.02.82 Bulletin 82/05

(45) Publication of the grant of the patent: 18.09.85 Bulletin 85/38

(84) Designated Contracting States: AT CH DE FR GB LI NL SE

(56) References cited:
FR-A-2 391 752
FR-A-2 416 711
US-A-3 926 798
US-A-4 039 440

ENVIRONMENTAL SCIENCE AND TECHNOLOGY, vol. 10, no. 4, 1976 Easton, US H.H.P. FANG: "Reverse Osmosis Separation of Polar Organic Compounds in Aqueous Solution", pages 364-369

(73) Proprietor: TORAY INDUSTRIES, INC.
2, Nihonbashi Muromachi 2-chome Chuo-ku
Tokyo 103 (JP)

(72) Inventor: KURIHARA, Masaru
15-B4-32, Sonoyama 2-chome
Otsu-shi Shiga 520 (JP)
Inventor: HARUMIYA, Noriho
8-17, Wakabadai
Otsu-shi Shiga 520 (JP)
Inventor: WATANABE, Tetsuo
13-1, Sonoyama 2-chome
Otsu-shi Shiga 520 (JP)
Inventor: KANAMARU, Naokatsu
1-31, Ichiriyama 4-chome
Otsu-shi Shiga 520 (JP)
Inventor: UEMURA, Tadahiro
Maison Yamashina 502, 18-2
Nagitsujihigashiura-cho
Yamashina-ku, Kyoto-shi, Kyoto 607 (JP)
Inventor: NAKAGAWA, Yukio Toray Apt. B1-41
16, Takehanajizojiminami-cho Yamashina-ku
Kyoto-shi Kyoto 607 (JP)

(74) Representative: Kador . Klunker . Schmitt-Nilson . Hirsch
Corneliusstrasse 15
D-8000 München 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 872 B1

(56) References cited:

**INDUSTRIAL AND ENGINEERING CHEMISTRY, Process Design Development, vol. 15, no. 1, 1976 Washington, US T. MATSUURA et al.: "Free Energy Parameters for Reverse Osmosis Separations of Undissociated Polar Organic Solutes in Dilute Aqueous Solutions", pages 149-161**

**ION EXCHANGE AND MEMBRANES, vol. 2, no. 1, 1974, London, GB S. SOURIRAJAN et al.: "Some Physicochemical Criteria Separation", pages 3-12**

**INDUSTRIAL AND ENGINEERING CHEMISTRY, Process Design Development, vol. 15, no. 2, 1976 Washington, US T. MATSUURA et al.: "Predictability of Reverse Osmosis Separations of Partially Dissociated Organic Acids in Dilute Aqueous Solutions", pages 350-357**

**PLATING, vol. 59, no. 4, april 1972 East Orange, New Jersey, US A. GOLOMB: "Application of Reverse Osmosis to Electroplating Waste Treatment" Part II, pages 316-319**

**Description**

Technical field to which the invention belongs

The present invention relates to semipermeable composite membranes for use in selective separation of liquids by the reverse osmosis process or more particularly to methods whereby such useful materials as various kinds of organic compounds, transition metal compounds, boric acid, or the like, are selectively separated from aqueous solutions thereof by using semipermeable composite membranes that have been optimized for the purpose of concentration of such aqueous solutions, of separation of said useful materials for their recovery and reutilization of refining.

Background of the invention

In recent years, the reverse osmosis process, that is, a process wherein aqueous solutions containing solutes are brought into contact with membranes having semipermeability under pressure maintained above the osmotic pressure exhibited by said aqueous solutions, thereby to selectively separate the solutes contained in said solutions, is going to develop into a stage of wider practical applications step by step and yet steadily, because, as is well known from, for instance, its application to the desalination of sea water, it is possible, with this process which does not involve any phase transition nor chemical change, to realize great savings in energy and resources as compared with for example, the evaporation method which has hitherto been a typical technique of desalinating sea water. Moreover, with this technique of separating solutes from a liquid by reverse osmosis, it is possible to separate organic compounds having markedly lower molecular weights than with the ultrafiltration method, or the like. As, besides, the operation of such separation can be carried out under the so-called "closed" system, the process is considered to be advantageous from the viewpoints of the prevention of environmental pollution and of the betterment of working environment.

A number of studies have been carried out in attempts to develop semipermeable membranes which satisfy practical requirements in respect of their selective separation performance; but, heretofore, semipermeable membranes that have been put to practical use may be said to be confined to those fabricated of either one of these two polymers: cellulose acetate of polyamides, there having been made no proposal as yet for a semipermeable membrane which is possessed of a selective separation capacity equal or superior to that of these two kinds of semipermeable membranes. Moreover, although semipermeable membranes hitherto known, including the aforesaid cellulose acetate and polyamide membranes, exhibit a fairly good selective separation capability for desalination of sea water or brackish water, their capability as a reverse osmosis membrane for selective separation of aqueous solutions containing such useful materials as various kinds of organic compounds, transition metal compounds, etc., is very limited, serving practical purposes merely with a few kinds of useful materials. They cannot be said as a matter of fact, to meet practical requirements in respect of their performance with several, especially more than ten, kinds of useful materials. Unlike in the case of desalinating brackish water or sea water, semipermeable membranes for use with reverse osmosis separation of aqueous solutions containing useful materials are required to have the undermentioned performance characteristics; and if these requirements are not met, it is difficult to uniformly separate quite a variety of useful materials from aqueous solutions thereof.

(1) The membrane should exhibit a high level of selective separation capability as well as a high flux rate with various kinds of useful materials.
(2) Since the osmotic pressure of an aqueous solution containing useful materials increases in proportion to higher degrees of concentration of useful materials, it is necessary to carry out operation under high pressure. Accordingly, the semipermeable membrane should be capable of standing such operation under high pressure.
(3) It should have an excellent resistance to heat and should be free from swelling, chemical metamorphism, etc., by the action of useful materials contained in the solution being treated.
(4) It should exhibit a selective separation performance at a certain fixed level over a wide range of pH used.

Furthermore, with the membrane used in the art of selective separation of aqueous solutions containing useful materials, it is thought that, in addition to the characteristics required as indicated above, its physical structure, as well as its chemical properties, is also closely related to its performance. In reality, however, the selective separation mechanism of such membrane has not yet been theoretically clarified in definite terms. As such, it is necessary to conduct measurements and evaluation of the selective separation characteristics of semipermeable membranes for selective separation of useful materials with respect to each individual useful material, while, needless to say, such attempts are also to be made in connection with semipermeable membranes for desalination of brackish water or sea water.

The known semipermeable membranes for reverse osmosis which have been evaluated as to their performance in selective separation of useful materials as indicated above include, besides the aforesaid cellulose acetate and polyamide, polyamide/urea, so-called "NS-100" of furfuryl alcohol, generally called "NS-200", of sulfonated polyphenyleneoxide and of polybenzimidazole;

and their selective separation performance have been evaluated with respect to about thirteen kinds of low molecular weight compounds including acids, aldehydes, amides, amines, esters, ethers, ketones, phenols, etc. However, the overall solute separation performance (rejection), with respect to these thirteen kinds of useful materials, of such membranes are very low, being no more than 12 to 26 percent with cellulose acetate membrane, 50 to 60 percent with polyamide membrane, and 70 to 78 percent with "NS-100" and "NS-200" membranes. (E. Chian et al, "Environmental Science and Technology", vol. 10, No. 4, p. 364 (1976); J. E. Cadotte et al., "Office of Saline Water Research and Development Progress Report", No. 982 (1974); "Office of Water Research and Technology", OWRT/S-1976/2. (1975).)

There is another report on a study, from a more theoretical standpoint, of the selective separation performances of cellulose acetate and polyamide membranes with respect to organic compounds similar to the aforesaid useful materials; and it is reported that the results obtained indicate they do not exhibit a selective separation performance that serves practical purpose with respect to low molecular weight organic compounds. (S. Sourirajan et al., "Journal of Applied Polymer Science", Vol. 19, p. 801 (1975).)

A process for selectively separating water-soluble materials from their aqueous solutions by reverse osmosis with semipermeable composite membranes constituted by a microporous supporting layer and a barrier layer formed on its surface, wherein the barrier layer comprises a cross-linked polymer the thickness of which is within the range from 0.01 to 0.1 μm, is also known from FR—A—2 391 752. In this publication a wide range of polymer forming substances for the barrier layer is disclosed, which do not comprise the cross-linked polymers according to the present invention.

According to the present invention such process is characterized in that the cross-linked polymer of the barrier layer is

a) a product of an intermolecular reaction of compounds having the isocyanurate structure represented by the following general formula (I).

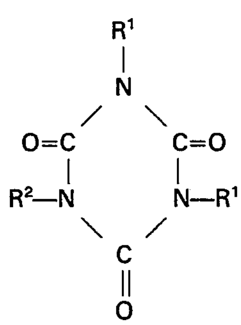

(I)

wherein $R^1$ is a glycidyl group or a group defined by the following general formula (II):

$$-A-X-(B-X)_n-R' \qquad (II)$$

wherein

A is an alkylene group having 2 to 5 carbon atoms and optionally having a hydroxyl group and/or a glycidyl group;

B is an alkylene group having 1 to 17 carbon atoms;

X indicates an —O— and/or an—C(O)—O— linkage;

n is zero or a positive integer, and, when n is 1 or a larger number A and B may indicate identical or different groups; and

R' is hydrogen or an alkyl group having 2 to 5 carbon atoms, and having a hydroxyl group and/or a glycidyl group; and

$R^2$ indicates a group selected from the group consisting of hydrogen, alkyl groups having 2 to 5 carbon atoms and $R^1$; or

b) a product of an intermolecular reaction between a compound represented by the general formula (I) and at least one of the following water-soluble comonomers: furfuryl alcohol, tetrahydrofurfuryl alcohol, epoxy compounds having 2 to 5 carbon atoms, polyethylene oxide, polyhydric alcohols having 2 to 8 carbon atoms, polybasic carboxylic acids having 2 to 17 carbon atoms, hydroxycarboxylic acids having 2 to 17 carbon atoms, formaldehyde, and mixtures thereof, the isocyanurate structures of the aforesaid cross-linked polymers being bonded to each other via bridges with —O— and/or —C(O)—O— linkages.

It is to be understood that the term "water-soluble useful materials" for the purpose of this application means organic compounds which are hydrocarbon or its derivatives having at least one out of these three kinds of elements, viz. oxygen, sulfur and nitrogen, wherein the total number of atoms of carbon, hydrogen, oxygen, sulfur and nitrogen is within the range of 7 to 30, or boric compounds, or transition metal compounds.

The most preferred mode of embodiment of the invention

As was previously stated, in spite of many attempts made in the past to develop the reverse osmosis separation technique by utilization of semipermeable membranes into the field of selective separation of useful materials, a number of technical difficulties lay in the way and, as such researches, development and commercialization have so far centered around the studies and evaluation of semipermeable membranes for desalination of brackish water or sea water, there having been few cases where an emphasis was placed on the selective separation of useful materials.

The inventors turned their attention to a strong social demand for the recovery and reutilization of useful materials such as various kinds of organic compounds and transition metal compounds, instigated by a drain on oil resources the world over, as well as to the extending effects, such as the prevention of environmental pollution, that will be brought about by such recovery and reutilization of these useful

materials, and have devoted themselves to studies and examinations of technology of selective separation by the reverse osmosis process, in particular, membranes for selective separation of useful materials, that has a number of merits in respect of savings in energy and resources, operational efficiency, and so forth, as was previously indicated. The present invention has been worked out as the result of such endeavors of theirs.

Semipermeable membranes employed in the art of separation of a liquid by reverse osmosis, generally known, may be broadly divided into these two classes: the asymmetric membrane, or the so-called "Loeb type" membrane, typical of which being the aforesaid cellulose acetate and polyamide membranes; and the semipermeable composite membrane consisting of a microporous supporting layer, or substrate, made of various kinds of polymers such as, for example, polysulfones and polyvinyl chlorides, and a barrier layer formed thereon, being an ultrathin film exhibiting semipermeability and being made of a polymer which is different from that which constitutes said supporting layer. The semipermeable membrane employed in the present invention is the latter, that is, the semipermeable composite membrane.

This semipermeable composite membrane has an advantage over the Loeb type membrane in imparting them with capability for selective separation of useful materials, because it is possible with it, unlike with the latter in which the whole membrane is composed of one and the same polymer, to select polymers that are to constitute the microporous supporting layer and the barrier layer independently of each other and to design the fabricating conditions for each layer separately; and what the present invention proposes is to apply, in the technique of reverse osmosis separation of aqueous solutions containing useful materials, a semipermeable composite membrane in which, as the barrier layer which determines the properties required of a semipermeable composite membrane to serve the practical purposes in selective separation of useful materials, such as heat resistance, mechanical strength, chemical resistance and adaptability to changes of pH over a wide range, not to speak of selective separation performance, an ultrathin film having a thickness in the range of 0.01 to 0.1 µm composed of a cross-linked polymer which is a product of an intermolecular reaction of compounds having the isocyanurate structure represented by the general formula (I) appearing below, is formed on the surface of the microporous supporting layer, or the substrate.

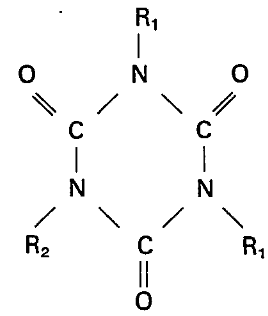

(I)

In the formula (I) above, $R^1$ is a glycidyl group or a group defined by the following general formula (II):

$$-A-X\!-\!(B-X)_n-R' \qquad (II)$$

In the formula (II), A is an alkylene group having 2 to 5 carbon atoms. It either may have a hydroxyl group and/or a glycidyl group or may have none.

B is an alkylene group having 1 to 17 carbon atoms.

X indicates the —O— and/or

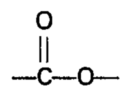

linkage.

n is zero or a positive integer. When n=1 or a larger number, A and each B may indicate identical or different groups.

R' is a hydrogen or an alkyl group having 2 to 5 carbon atoms, and having a hydroxyl group and/or a glycidyl group.

Again, in the formula (I), $R_2$ indicates a group selected from the group consisting of hydrogen, alkyl groups having 2 to 5 carbon atoms and $R_1$.

The isocyanurate structure of the aforesaid crosslinked polymer is being combined by the medium of the —O— and/or

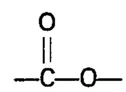

linkage.

The barrier layer which is composed of the crosslinked polymer as described above, determines the selective separation performance of said semipermeable composite membrane, or, in concrete terms, its capability to prevent the permeation of solutes contained in the aqueous solution while allowing the water to flux therethrough; and its great characteristic lies in that it exhibits a stabilized selective rejection performance not only with a specific or just a few

kinds of useful materials but also with many, or more particularly, at least ten kinds of useful materials, as will be described in more detail later in this specification.

Here, the cross-linked polymer as used in this invention, is not confined to a homo- or mixed polymer of compounds corresponding to the general formula (I), but could be also a water-soluble, initial condensation product (oligomer) of compounds corresponding to the general formula (I) or a water-soluble, condensation and/or addition reaction product which is an initial reaction product of compounds corresponding to the general formula (I), and comonomers which will be described later on. Suitable polymers are selected from these according to the process by which, and to the conditions under which, its film is formed on the surface of microporous supporting layer, while taking into consideration, of course, the characteristics required of the semipermeable composite membrane.

While examples of the compounds corresponding to the general formula (I) include 1,3,5-tris (hydroxyethyl) isocyanuric acid; 1,3,5-tris (glycidyl) isocyanuric acid; and bis (hydroxypropyl) isocyanuric acid; or mixtures thereof, it would be preferable to employ 1,3,5-tris (hydroxyethyl) isocyanuric acid.

In the present invention, the aforesaid cross-linked polymer is that in which compounds having the isocyanurate structure, as described above, are combined with groups represented by the general formula (II), and its characteristic lies in that it has said isocyanurate structure in its high molecular cross-linked structure. The groups defined by the general formula (II), which combine said isocyanurate structure by cross-linkage, may either be those which are produced by the direct reaction of the functional groups possessed of by the compounds corresponding to the general formula (I), that is to say, the starting materials (for example, three hydroxyethyl groups in the case of 1,3,5-tris (hydroxyethyl) isocyanuric acid); or be those which are produced by the polymerization of said functional groups possessed of by starting materials and copolymers that are reactive with them, being condensation and/or addition reaction products formed by the so-called "chain extending", retaining water-solubility; or, again, be those which are formed by the reaction of these starting materials represented by the general formula (I), or water-soluble condensation reaction products, or mixtures thereof, with comonomers which will be described later in this specification. In the last-mentioned case, the groups will have a variety of chain lengths depending upon the kinds of comonomers selected.

As, however, the groups defined by the general formula (II), which combine the isocyanurate structure of the cross-linked polymer of this invention, are those having the ether linkage and/or ester linkage, said cross-linked polymer may be said to be, fundamentally, that which consists of polyethers, or of polyesters, or of polyether-esters. In case the compounds corresponding to the general formula (I) are bifunctional compounds, it is necessary, of course, to cause said crosslinked polymer to have a three-dimensional cross-linked structure by means of the functional group that links with the group defined by the general formula (II) and, thus, to employ multifunctional, at least trifunctional, compounds as comonomers.

Compounds that are to copolymerize with the compounds corresponding to the aforesaid general formula (I), that is to say, comonomers which are capable of forming the ether linkage and/or ester linkage are at least one of the following comonomers: furfuryl alcohol, tetrahydrofurfuryl alcohol, epoxy compounds having 2 to 5 carbon atoms, polyethylene oxide, polyhydric alcohols having 2 to 8 carbon atoms, polybasic carboxylic acids having 2 to 17 carbon atoms, hydroxy-carboxylic acids having 2 to 17 carbon atoms, formaldehyde, and mixtures thereof. Examples of epoxy compounds are ethylene oxide and propylene oxide; those of polyhydric alcohols are ethylene glycol, glycerine, sorbitol and inositol. As examples of polybasic-carboxylic acids may be cited: oxalic acid, succinic acid, maleic acid, fumaric acid and 1,2,3,4-butanetetracarboxylic acid; and as those of hydroxy-carboxylic acids: glycolic acid, malic acid, tartaric acid, citric acid and salicylic acid. Out of these comomomers, furfuryl alcohol, ethylene glycol and formaldehyde may be used to great advantage for the semipermeable composite membrane of the present invention, as they show exceedingly high selective rejection rates with many kinds of useful materials.

Amongst the cross-linked polymers containing such comonomers as mentioned above, that which is obtained by the reaction of 1,3,5-tris (hydroxyethyl) isocyanuric acid with furfuryl alcohol and/or ethylene glycol shows an outstanding performance and durability in the selective separation of water-soluble useful materials according to this invention.

As for the ratio of the compound corresponding to the general formula (I) to the comonomer employed for their reaction, a ratio of at least 15 weight percent to not more than 85 weight percent, respectively, may be employed. Preferably, they should be employed at the ratio of 20 up to 80 weight percent of the compound corresponding to the general formula (I) to 80 down to 20 weight percent of the comonomer respectively.

Here, it is pointed out that the thickness of the barrier layer of semipermeable composite membrane consisting of a cross-linked polymer, as described above, is required to be within the range of about 0.01 to 0.1 μm preferably within the range of 0.015 to 0.05 μm. In case its thickness is greater than about 0.1 μm, the rate of water flux lowers and it is difficult to separate useful materials at a rate that serves the practical purposes; while, in case the thickness is smaller

than 0.01 μm, there arises a problem in the aspect of durability.

The microporous supporting layer, or the substrate, which supports and reinforces the barrier layer of the semipermeable composite membrane of this invention may consist of any one of these: polysulfone, polyvinyl chloride, polyvinylidene chloride, chlorinated polyethylene, polyacrylonitrile, and copolymers thereof. While it could be either a flat membrane, or a hollow fiber membrane, or a tubular membrane, it should preferably be a membrane consisting of polysulfone or polyvinyl chloride, and having an anisotropic structure, that is to say, a membrane in which the pore diameter varies from one surface of the membrane (in the case of the hollow fiber membrane, the exterior surface) towards it other surface. Preferably, the layer should have an average pore diameter in the range of 0,001 to 0.1 μm on its surface where the barrier layer is formed, and an average diameter of about 1 to 100 μm on the opposite side, thus the pore diameter gradually growing larger from the side where the barrier layer lies towards the opposite side. On the other hand, the thickness of these microporous supporting layers would vary according to their shapes, but those having a thickness in the range of about 20 to 100, preferably about 30 to 70 μm, may be employed to advantage. Furthermore, it would be advantageous to line the microporous supporting layer with, as a reinforcing material, textile or nonwoven fabric which has either been treated, by calendering, to make its surface smooth or not been so treated, or with film, paper, or the like, whereby to improve the mechanical strength of the semipermeable composite membrane.

The microporous supporting layer, in the anisotropic structure, with the barrier layer formed thereon of a cross-linked polymer as described in the foregoing, may, as it is, be fabricated to modules for use as the semipermeable composite membrane of the present invention. Satisfactory results are obtained in the selective separation of many useful materials by just employing such. However, an improvement may be brought about by further processing the membrane in the following manner. That is to say, on the surface of said barrier layer, there is formed, for its protection, a water-insoluble membrane consisting of polyvinyl alcohol and/or partly saponified polyvinyl acetate, having a thickness within the range of about 0.1 to 10, preferably 0.5 to 2 μm. It prevents mechanical damages being done to the barrier layer, lowering of the properties of said semipermeable composite membrane in the course of its fabrication to modules, and lowering of the selective separation performance of the membrane in the course of its use for actual operations, thus making it fit for the operation over a long period of time. Besides, for some kinds of useful materials, there is brought about an improvement in the selective separation performance of the semipermeable composite membrane by this formation of the protective layer. However, the thickness of this protective layer should be within the range of about 0.1 to 10 μm. In case the protective layer is thicker than about 10 μm, it often proves to be detrimental to the selective separation performance of the barrier layer, causing the lowering of the flux rate and, in some cases, exfoliation and falling-off of the protective layer in the course of operation over many hours; so such is undesirable. In case, on the other hand, the protective layer is thinner than about 0.1 μm, it does not function as a protector of the barrier layer, nor produces the effect of bettering the selective separation performance; so such is also undesirable.

As for the partly saponified polyvinyl acetate, out of said polyvinyl alcohol and/or partly saponified polyvinyl acetate employed for the formation of the protective layer, that of which the degree of saponification,

$$\frac{n}{m+n}$$

in the following general formula:

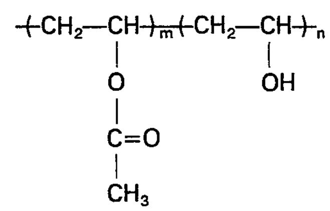

is not less than 0.70 may be employed to better advantage. In case its degree of saponification is less than 0.70, it will not dissolve in water well. The degree of polymerization, m+n, should be preferably within the range of 100 to 3,000. In case it is below the lower limit, the watersolubility of the material will be too strong and there may sometimes arise a problem in respect of the durability of the protective layer; while, in case it exceeds the upper limit, the viscosity of the aqueous solution of the material will be too high and it will be difficult to make an adjustment of the thickness of the protective layer.

As for the manufacturing method for the semipermeable composite membrane of this invention, there is, as a basic one, a method wherein a coating of an aqueous solution containing a monomer and/or initial reaction product, such as oligomer, and an acid catalyst, which will be described in further detail later on, is applied on the surface of the microporous supporting layer, or the substrate, and such constituents of the solution are caused to react with each other on said supporting layer to form a polymer possessed of semipermeability; and such is disclosed in concrete terms in U.S—A—3,926,798 as well as in the specification of Japanese Patent Application No. 53-14046 directed to an invention of the present inventors. The performance of a semipermeable composite membrane, as such, will depend upon the thickness of the barrier

layer. If the barrier layer is too thick, the membrane will not have a sufficient capability to pass water therethrough. Accordingly, the barrier layer is required to be as thin as possible. With the manufacture of the composite membrane, therefore, there is involved a technical difficulty in that it is necessary to form on the supporting layer what may be called an "ultrathin" film, as the barrier layer, in a uniform thickness. This difficulty is, however, much alleviated by forming a protective membrane layer as above.

In the manufacture of the semipermeable composite membrane of the present invention, it is possible to obtain composite membrane having an improved selective separation capability and excelling in durability only when the manufacturing conditions which will be described in detail in the following paragraphs have been applied.

As the first step of manufacturing the composite membrane of this invention, a coating liquid containing a compound corresponding to the general formula (I) and comonomers as well as water-soluble condensation and/or addition reaction products thereof is applied over the surface of the aforesaid microporous supporting layer, or the substrate; and these reactants are caused to react with each other by means of an acid catalyst on the supporting layer so that a barrier layer incorporated with it may be formed thereon. On this occasion it is first dried at a temperature of not higher than 140°C, and is subsequently subjected to a heat treatment at a temperature at least about 10°C higher than the drying temperature.

As the acid catalyst, in the above-mentioned process, sulfuric acid, phosphoric acid, hydrochloric acid, methane-sulfonic acid, benzenesulfonic acid, etc. may be employed. However, sulfuric acid may be employed to the best advantage.

As a solvent for preparation of said coating liquid, water is commonly used. However, better results may some times be obtained by the addition, to water, of alcohols, in particular, methanol, ethanol, isopropanol, propanol, etc.

Said coating liquid may be applied onto the microporous supporting layer in various methods, including, for instance, such well known methods as spraying, dipping in the liquid coating or the like means. To form the barrier layer from the coating liquid containing the reactants composed mainly of a compound corresponding to the general formula (I) and comonomers, as indicated above, it is necessary to remove the solvent from the coating liquid, to cause the reactants to polymerize, and to remove moisture from the supporting layer; and, in this process of forming the barrier layer, a slight variation of the conditions brings about a large change in the membrane characteristics. It is thought, for instance, that, with variations of the thickness of a polysulfone supporting layer and of its moisture content, the amount of coating attaching thereto varies, accompanied by changes in the speed of water and solvent drying up and in the reaction rate of the reactants.

When, however, the composite membrane is first dried at a temperature of not higher than about 140°C and is then subjected to a heat treatment at a temperature higher than the drying temperature by at least about 10°C, like in the present invention, it is possible to minimize the fluctuation of the membrane characteristics and to manufacture, with good reproducibility, composite membranes having a stabilized quality and giving a stabilized performance. Although the reason for such is not sufficiently clear, the following interpretation will probably hold good. That is to say, in the first stage of the drying process, the removal of the moisture content of the supporting layer and the solvent of the coating liquid takes precedence over anything else, and the shrinkage, from heat, of the supporting layer consisting of polysulfone, etc., is liable to constitute a great cause for fluctuations of the performance of the composite membrane obtained; but, in this invention the reactants contained in the coating liquid that has permeated into the pores existing on the outermost layer of the supporting substrate partly polymerize making the cross-linked polymer formed less susceptible to deformation from heat, and thus a restraint seems to be placed on the shrinkage of the supporting layer, or the substrate.

The semipermeable composite membrane thus produced by forming a barrier layer on a microporous supporting layer is then covered with a water-insoluble protective film consisting of polyvinyl alcohol (PVA) and/or partly saponified polyvinyl acetate (PVAc).

Polyvinyl alcohol and/or partly saponified polyvinyl acetate are/is applied on the composite membrane as their/ its aqueous solution. As the solvent, only water is generally used, but a small amount of other solvents which is not liable to cause deterioration of the composite membrane, for example, alcohols, etc. may eventually be mixed into water. The concentration of polymers in the aqueous solution should be in the range of 0.2 to 5, preferably 0.5 to 1.5 percent. This concentration of polymers, together with the method of coating, determines the thickness of the protective film. An acid catalyst for causing PVA and/or PVAc to become water-insoluble is added to this aqueous solution of polymers. Water-soluble acid catalysts as were previously indicated, for example, sulfuric acid and phosphoric acid, may be employed to advantage. Incidentally, in case the acid catalyst used for the formation of the barrier layer remains in it, this acid catalyst migrates into the protective film while it is being formed; so, there is not particular need for adding an acid catalyst to said aqueous solution of polymers. Further, there are cases where a resin or polymer which is capable of forming a cross-linkage with polyvinyl alcohol, for example, melamine resin, etc. may be used to advantage for addition to said aqueous solution

of polymers to strengthen the cross-linkage. Still further, a surface active agent may be added to said aqueous solution of polymers in order to improve its wetting with the surface of the barrier layer so that it may attach evenly to the whole surface.

As for means to coat the composite membrane with the aqueous solution of polymers, any one of the known methods may be applied. There are, for example, a method in which the composite membrane is coated with the aqueous solution of polymers; a method wherein the composite membrane is dipped in the aqueous solution; a method in which the aqueous solution of polymers is sprayed over the composite membrane; and so forth. Out of these, the method of coating by means of rollers would be preferable, for with such, it is easy to make an adjustment of the thickness. Coating may be carried out with the aqueous solution of polymers at a temperature in the range of 10 to 30°C.

The heat treatment conditions would vary with the means of drying employed, that is, the type of drier used; but, in the case of a hot-air drier in common use, a heat treatment temperature in the range of 80 to 120°C and a heat treatment time in the range of 1 to 10 min. may be used to advantage.

The protective film thus formed has a thickness of about 0.1 to 10 µm and because of this thinness of the film, there is produced an interference pattern on the surface of the film. Said protective film layer will not fall off even after long duration of use. It will not only markedly improve the durability of the composite membrane but will also improve its performance as a semipermeable membrane. For instance, its water flux rate in the initial stage is enhanced by as much as 10 to 20 percent.

Further merits of the present invention will become clear from the examples of its embodiment which will be described in the following.

The semi-permeable composite membrane obtained by the method as described in the foregoing is fabricated to modules in accordance with the known methods. When, for instance, said semipermeable composite membrane is in the form of a flat membrane, it may be fabricated into a spirally wound element as disclosed in the specifications of U.S.—A—3,933,646 and US—A—3,367,504. That is to say, the aforesaid semipermeable composite membrane is laminated with materials which are to form the passage for the solution being treated and permeant liquid, and is made into an envelope-like sheet. This sheet is wound spirally around a pipe with perforations, which constitute the core of the element, with the end of said envelope-like sheet for discharge of permeant liquid connected to the bore of said pipe. The element thus formed is housed in a high pressure chamber, and is employed as the reverse osmosis separation apparatus for selective separation of aqueous solutions containing useful materials.

The reverse osmosis separation apparatus provided with the semipermeable composite membrane of this invention, as above, will exhibit an excellent selective separation performance with various kinds of organic compounds and transition metal compounds, as well as with boric compounds, typical of which being boric acid.

Whilst is it necessary that useful materials that can be selectively separated by the method of this invention be, basically, those which exhibit water-solubility, the method is sufficiently workable with aqueous solutions containing, at least, the following useful materials, viz., organic compounds which are hydrocarbon and hydrocarbon derivatives having at least one out of these three kinds of elements, oxygen, sulfur and nitrogen, wherein the total number of atoms of carbon, hydrogen, oxygen, sulfur and nitrogen is within the range of 7 to 30; boric compounds; and transition metal compounds.

Said organic compounds would be at least one kind selected from the group consisting of aliphatic alcohols having 2 to 8 carbon atoms; carboxylic acids having 2 to 8 carbon atoms; aldehydes having 2 to 8 carbon atoms; ketones having 3 to 8 carbon atoms; phenols having 6 to 13 carbon atoms; amides having 1 to 8 carbon atoms; esters having 2 to 10 carbon atoms; ethers having 4 to 8 carbon atoms; amines having 2 to 10 carbon atoms; hydroxy acids having 3 to 7 carbon atoms; and aprotic polar solvents having 2 to 6 carbon atoms, other than the above-mentioned compounds. As examples of transition metal compounds may be cited Ni, Co, Fe, Cr, U, Ag, Au, Cu, Mo, W, Hg and Pt compounds which form ions and complex ions; and as an example of boric compounds, boric acid.

Examples of the aforesaid aliphatic alcohols would include at least one kind selected from the group comprising ethyl alcohol, propyl alcohol, cyclohexanol, ethylene glycol, glycerine, sorbitol and cyclohexanediol. Those of carboxylic acids are: acetic acid, propionic acid, butyric acid, benzoic acid, toluic acid, oxalic acid, malonic acid, phthalic acid and trimellitic acid. Examples of aldehydes would include acetaldehyde, propionaldehyde, furfural and benzaldehyde; and those of ketones, acetone, methyl ethyl ketone, cyclohexanone and acetophenone. As examples of ethers, diethyl ether, anisole tetrahydrofuran, tetrahydropyrane, dioxane and styrene oxide may be cited; and as those of esters, methyl acetate methyl benzoate and methyl acrylate. As amines, ethylamine, benzylamine, aniline, toluidine, piperidine, piperazine, dimethylamine, trimethylamine and pyridine may be cited as examples. Amides may be exemplified by formamide, acetamide, urea and ε-caprolactam. Further, as examples of phenols may be cited phenol, cresol, resorcinol, hydroquinone, aminophenol and pyrogallol; and as those of hydroxy acids, lactic acid, malic acid, tartaric acid and citric acid.

As examples of aprotic-polar solvents dimethylsulfoxide, N,N-dimethylformamide and N-methylpyrrolidone may be cited.

Examples of transition metal compounds would include: nickel cyanide, sodium chloroplatinate, potassium chloraurate, sodium ferrocyanide, sodium ferricyanide, copper sulfate, silver nitrate, uranium nitrate, cobalt chloride and chromium chloride.

The method of selective separation, by the use of the semipermeable composite membrane of the present invention, of aqueous solutions containing water-soluble useful materials exhibit an average rate of selective rejection of as high as at least 80 percent. In particular, it shows an outstandingly good selective separation performance with ethylene glycol, ε-caprolactam, ethyl alcohol, tetrahydrofuran, phenol and boric acid. As such, its industrial significance is exceedingly great, it may be applied for practical purposes widely in various sectors of the industry, such as textile, organic chemical and metal plating industries, and in the field of concentration of ethanols formed by fermentation and decomposition of natural materials (utilization of biomass), etc. as well as in the technology of treatment of waste water containing organic compounds as indicated above.

Although no particular limitation is placed upon the concentration of useful materials contained in aqueous solutions to be treated by the method of this invention, the method will prove to be particularly effective with selective separation of useful materials from their aqueous solutions at lower concentrations, such being the merit of the reverse osmosis process. Accordingly, it is desirable that the concentration of useful materials in the solution being treated by the method of this invention be in the range of about 0.01 to 20 weight percent, more preferably about 0.1 to 10 weight percent.

Furthermore, the kind of useful materials contained in the solution being treated is not necessarily limited to only one, but the solution may contain two or more kinds of useful materials. The method may also be utilized for treatment of brackish water or sea water containing these water-soluble useful materials.

Potentials for industrial utilization

As will be seen from the detailed descriptions given in the foregoing, the method of selective separation of the present invention permits the selective separation of specific solutes contained in aqueous solutions without involving the phase transition, chemical changes and the change of temperature; that is to say, it utilizes the characteristics of the reverse osmosis process, which are very advantageous in respect of savings in energy and resources, cleverly for the selective separation of water-soluble useful materials. The method of this invention is quite a "universal" method of selective separation which, in virtue of the superb capability of the semipermeable composite membrane therein used, permits the selective separation of at least ten kinds of useful materials, and that, at a rate of selective separation of as high as at least 80 percent, often exceeding 90 percent depending upon the condition. As such, the method may be utilized to great advantage in the following industrial fields.

(1) It can be effectively utilized for, in the chemical industry, separation and recovery of various kinds of organic compounds contained in aqueous solutions that are arising in the process of manufacturing such organic compounds, as well as for, in various kinds of manufacturing processes using organic chemicals, removal of unwanted ingredients, that is, impurities, from aqueous solutions containing such organic compounds for the purpose of refining. For instance, in the synthetic fiber manufacturing processes, large amounts of fiber-producing materials and solvents, such as ε-caprolactam, ethylene glycol, terephthalic acid, dimethylsulfoxide, dimethylformamide, etc., are used; and, in waste liquids that are discharged in the processes contain said fiber-producing materials and solvents at irregular concentrations. In the treatment of these waste liquids, it is possible to apply the reverse osmosis process only when a semipermeable membrane having chemical resistance. The present invention not only makes such possible, but also permits the recovery and reutilization of said fiber-producing materials and solvents. As, besides, the waste water treatment can be carried out under the so-called "closed-system", the method of the invention is very advantageous from the viewpoint of the prevention of environmental pollution.

(2) The utilization of lower alcohols, such as ethanols, formed by fermentation and decomposition of natural products, for instance, the utilization of biomass, is attracting a good deal of public attention as an energy source in the future taking the place of the oil resources. Since these lower alcohols from biomass is obtainable only as their aqueous solutions at a low concentration of a mere several percent, it is impossible to utilize them, as they are, as a source of energy, like fuel, but it is necessary to resort to some means of concentrating them. This invention makes it possible, by virtue of its characteristics of selective separation in an energy-saving manner, to concentrate these aqueous solutions of lower alcohols at low concentrations very advantageously by a simple and easy process.

(3) With the metal plating industry, the treatment of waste plating solutions and of liquids used for cleansing of the products is a big problem. For such treatment to recover expensive transition metals, containing such valuable metals as gold, silver, copper, nickel, chromium, cobalt, etc. and to eliminate such poisonous substances as boric acid, prussic acid, etc., complex processes and a great deal of energy are required. The method of this

invention makes it possible to simplify, by a large measure, such processes of treating waste plating solutions and waste liquids arising from cleansing of the products, and to also realize a great saving in energy. Moreover, its adoption brings about a great advantage in the aspect of prevention of environmental pollution and the improvement of working environment, because the processes can be carried out under the so-called "closed-system". Furthermore, while a large amount of water is used for the treatment of waste plating solutions or cleansing liquids, as above, the application of the method of this invention permits the recovery and reutilization of water and thus realizes a great saving in water used. This is another merit of the method of this invention.

(4) Still further, it is common, with waste water treatments practiced in general, that the kind of low molecular weight organic compounds and transition metal compounds is not limited to just one, but several kinds of compounds are contained in the waste water being treated. As the semipermeable composite membrane used in this invention exhibits its capability of selective separation with at least ten kinds of useful materials, it is possible to apply the method of the invention also to such waste water treatment, for instance, treatment of brackish water or sea water containing useful materials, as was previously indicated.

Example 1

A rectangular piece, 20 cm×30 cm large, of taffeta made of polyester fibers (16,65 tex multifilament yarns used as both the warp and weft; warp=35,4 yarns/cm and weft=18,9 yarns/cm thickness=160 μm) is fixed flat on a glass plate; on it is cast a 15-wt.pct. solution of polysulfone (Udel p-3500 mfd. by Union Carbide Company) in dimethylformamide (DMF), at the room temperature (15 to 30°C), to a thickness of 200 microns; and it is immediately dipped in a 0.5-wt.pct. aqueous solution of sodium dodecylbenzenesulfonate at the room temperature. After having left it as it is for five minutes it is taken out and washed in pure water for an hour. Thus, a fiber-reinforced, polysulfone supporting layer (hereinafter called the "FR—PS supporting layer", for short) is obtained. The pure water permeation coefficient of this FR—PS supporting layer (200 μm in thickness) is, measured at a pressure of 98,07 kPa and at a temperature of 25°C, 0.01 to 0.020 $g/cm^2.s.bar$. An aqueous solution containing 1 wt.pct. tris (hydroxyethyl) isocyanuric acid (hereinafter called "THEIC" for short), 2 wt.pct. furfuryl alcohol (hereinafter called "FA" for short) (THEIC/FA molar ratio=16/84), 2 wt.pct. sulfuric acid, 1 wt.pct. sodium dodecylsulfate and 20 wt.pct. isopropyle alcohol, is prepared; and in this aqueous solution is dipped the FR—PS supporting layer wet with water for five minutes at 15°C. Then, the FR—PS supporting layer is taken out; its two ends, lengthwise, are held between 2-cm wide steel plates (150g/pce.); and it is hung perpendicularly for one minute at a temperature of 20°C. Then, the FR—RS supporting layer, maintained in such a condition, is put in a hot-air drier and is dried at 130°C for three minutes, followed by a heat treatment at 150°C for five minutes. In the next place, this membrane is fixed flat on a glass plate, and on its surface is applied a coating of an aqueous solution of 1 wt.pct. polyvinyl alcohol of which the degree of saponification is 100 mole percent and the degree of polymerization 1,500 (NM-14 mfd. by Nippon Synthetic Chemical Industry Co. Ltd.) in the room temperature (20°C), finished to a thickness of 50 μm using a doctor blade. Then, it is put in a hot-air drier, and is subjected to heat treatment for two minutes.

On the surface of the composite membrane thus obtained, there was observed an interference pattern formed by the thin film of poly vinyl alcohol. Further, the thicknesses of the two layers of the composite membrane were measured by electro microscopic observation, and these values were obtained: the barrier layer=0,03 μm, and the protective film layer=0.4 to 0.5 μm.

Using this membrane, a test was carried out of its selective separation performance with a 6-pct. aqueous solution of ethyl alcohol, at temperature of 25°C and under pressure of 5883,99 kPa; and the efficiency was measured at these points of time; 24 hours and 500 hours after starting the operation. The results obtained are shown in Table 1 below.

TABLE 1

| | Solute rejection (%) | Water flux ($m^3/m^2$.day) |
|---|---|---|
| After 24 hrs. | 97.0 | 0.26 |
| After 500 hrs. | 96.8 | 0.27 |

Using this membrane, tests were conducted of its selective separation performances with a 1-pct. aqueous solution of phenol and a 1-pct. aqueous solution of urea, at temperature of 30°C and under pressure of 5883,99 kPa. The results obtained are shown in Table 2 below.

TABLE 2

| Useful material | Solute rejection (%) | Water flux ($m^3/m^2$.day) |
|---|---|---|
| Phenol | 99.0 | 0.24 |
| Urea | 85.0 | 0.57 |

Likewise, tests were conducted of the selective separation performance of said membrane with 5-pct. and 10-pct. aqueous solutions of tetrahydrofuran, at temperature of 30°C and under

pressure of 5491,72 kPa. The results obtained are shown in Table 3 below.

TABLE 3

| Concentration (%) | Solute rejection (%) | Water flux ($m^3/m^2$.day) |
|---|---|---|
| 5 | 99.8 | 0.28 |
| 10 | 99.1 | 0.13 |

Further, tests were conducted with 1-pct., 5-pct. and 10-pct. aqueous solutions of ethylene glycol, at temperature of 30°C and under pressure of 5883,99 kPa. The results obtained are shown in Table 4 below.

TABLE 4

| Concentration (%) | Solute rejection (%) | Water flux ($m^3/m^2$.day) |
|---|---|---|
| 1 | 94.6 | 0.52 |
| 5 | 94.2 | 0.21 |
| 10 | 87.5 | 0.08 |

Example 2

An aqueous solution containing 4 wt.pct. THEIC, 2 wt. pct. FA (THEIC/FA molar ratio=43/57), 4 wt.pct. sulfuric acid, 1 wt.pct. sodium dodecylsulfate and 20 wt.pct. isopropyl alcohol, was prepared; and was aged for 15 minutes at the room temperature. Then, using the FR—PS supporting layer of Example 1, samples of composite membranes were fabricated in the same manner as in Example 1.

Using said membrane, a performance test was conducted with a 5-pct. aqueous solution of ε-caprolactam at temperature of 50°C and under pressure of 3922,66 kPa and these results were obtained: water flux=0.45 $m^3/m^2$.day; and rate of rejection of ε-caprolactam=98 pct.

Again, using said membrane, a test was conducted of the selective separation performance of the membrane with a 10-pct. aqueous solution of dimethysulfoxide at temperature of 50°C and under pressure of 4903,33 kPa and these results were obtained: water flux=0.17 $m^3/m^2$.day; and rate of rejection of dimethylsulfoxide=96 pct.

Further again, using said membrane, tests were conducted of its separation performance with a 5-pct. aqueous solution of acetic acid and a 5-pct. aqueous solution of ethylene glycol, at temperature of 30°C and under pressure of 5883,99 kPa. The results obtained are shown in Table 5 below.

TABLE 5

| Useful material | Solute rejection (%) | Water flux ($m^3/m^2$.day) |
|---|---|---|
| Acetic acid | 81 | 0.40 |
| Ethylene glycol | 94 | 0.40 |

Example 3

An aqueous solution containing 1 wt.pct. THEIC, 2 wt. pct furfuryl alcohol (THEIC/FA molar ratio=16/84) 2 wt.pct. sulfuric acid, 1 wt.pct. polyethylene glycol having a molecular weight of 400, and 20 wt.pct. isopropyl alcohol, was prepared; and was aged for 15 minutes at the room temperature. Then, samples of composite membranes were made in the same manner as in Example 1, except that the heat treatment temperature was 160°C in this instance, and their performance was evaluated.

That is to say, their selective separation performance was tested with a 1-pct. aqueous solution of acetone and a 1-pct. aqueous solution of ethylamine at temperature of 30°C and under pressure of 5883,99 kPa and the results as shown in Table 6 below were obtained.

TABLE 6

| Useful materials | Solute rejection (%) | Water flux ($m^3/m^2$.day) |
|---|---|---|
| Acetone | 92 | 0.30 |
| Ethylamine | 81 | 0.20 |

Example 4

To 88 parts THEIC is added 10 parts water; and the mixture is stirred for 10 minutes at 130°C. Then, the temperature is raised to 140°C, and thereafter 2 parts sulfuric acid is added. The mixture is stirred for a further 10 minutes, and reducing the pressure, water is caused to evaporate. Using an aqueous solution containing 2 wt.pct. of an initial condensation product of THEIC obtained as above, 0.7 wt.pct. sodium dodecylsulfate, and 0.1 wt.pct. sulfuric acid, a composite membrane was made in the same manner as in Example 1.

Using this membrane, a test was conducted of its separation performance with a 5-pct. aqueous solution of tetrahydrofuran, at temperature of 30°C and under pressure of 5883,99 kPa; and these results were obtained: water flux=0.05 $m^3/m^2$.day; and the rate of rejection of tetrahydrofuran=95 pct.

Example 5

A polysulfone supporting layer was made in the

same manner as in Example 1, except that, instead of using, in the process of making it, a piece of taffeta woven of polyester fiber yarns, a piece of nonwoven fabric composed of the same fibers (filaments of 0,333 tex used; density=110 $g/m^2$; thickness=120 μm) was employed. A composite membrane was made of this supporting layer in the same manner as in Example 2; and its separation performance was tested with a 5-pct. aqueous solution of ε-caprolactam at temperature of 50°C and under pressure of 3922,66 kPa. The results obtained were: water flux=0.75 $m^3/m^2$.day; and the rate of rejection of ε-caprolactam=99.9 pct.

Example 6

An aqueous solution containing 2 wt.pct. THEIC, 0.7 wt.pct. sodium dodecylsulfate, and 0.1 wt.pct. sulfuric acid, was prepared; and was aged for 5 minutes at the room temperature. Then, using the FR—PS supporting layer of Example 1, a composite membrane was made in the same manner as in Example 1. A test was conducted of the separation performance of this membrane with a 1-pct. aqueous solution of phenol at temperature of 30°C and under pressure of 5883,99 kPa; and these results were obtained: water flux=0.05 $m^3/m^2$.day; and phenol rejection rate=94 pct.

Example 7

Using the membrane of Example 3, a test was made of its selective separation performance with boron (5 ppm) contained in 3.5-pct. synthetic sea water, at a temperature of 25°C and under pressure of 5491,72 kPa; and a boron rejection rate of 88 pct. was obtained.

Example 8

Using the membrane of Example 2, a test was conducted of its separation performance with a 1-pct. aqueous solution of methyl acetate at a temperature of 30°C and under pressure of 5883,99 kPa; and these results were obtained; water flux=0.50 $m^3/m^2$.day; and methyl acetate rejection rate=82 pct.

Example 9

Using the membrane of Example 1, a test was conducted of its selective separation performance with a mixed aqueous solution containing, as useful materials, 5 pct. of acetic acid and 1 pct. of methyl acetate, at a temperature of 25°C and under pressure of 6864,66 kPa. The results obtained are shown in Table 7 below.

TABLE 7

| Useful materials | Solute rejection (%) | Water flux ($m^3/m^2$.day) |
|---|---|---|
| Acetic acid | 83.9 | 0.43 |
| Methyl acetate | 84.0 | |

Example 10

Using the membrane of Example 2, a test was conducted of its selective separation performance with a mixed solution of 0.5 pct. salt and 1 pct. phenol in water, at a temperature of 30°C and under pressure of 5883,99 kPa. The results obtained are shown in Table 8 below.

TABLE 8

| Solutes | Solute rejection (%) | Water flux ($m^3/m^2$.day) |
|---|---|---|
| Salt | 99.9 | 0.20 |
| Phenol | 99.0 | |

Example 11

Using a membrane made in the same manner as in Example 1, except that the coating of polyvinyl alcohol was not applied, that is to say, a membrane without the protective film, a test was carried out of its separation performance with a 6-pct. aqueous solution of ethyl alcohol, at a temperature of 25°C and under a pressure of 5883,99 kPa; and the efficiency was measured at these points of time: 24 and 500 hours after starting the operation.

The results obtained are shown in Table 9 below.

TABLE 9

| | Solute rejection (%) | Water flux ($m^3/m^2$.day) |
|---|---|---|
| After 24 hrs. | 96.5 | 0.26 |
| After 500 hrs. | 95.0 | 0.28 |

**Claims**

1. A process for selectively separating water-soluble valuable materials from their aqueous solutions by reverse osmosis with semi-permeable composite membranes constituted by a microporous supporting layer and a barrier layer formed on its surface, wherein the barrier layer comprises a cross-linked polymer the thickness of which is within the range of from 0.01 to 0.1 μm, characterized in that said cross-linked polymer is

a) a product of an intermolecular reaction of compounds having the isocyanurate structure represented by the following general formula (I).

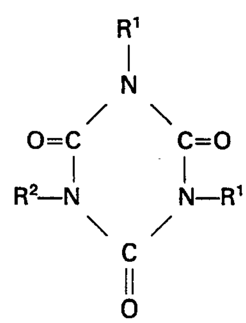

(I)

wherein $R^1$ is a glycidyl group or a group defined by the following general formula (II):

$$-A-X-(-(B-X)_n-R' \quad (II)$$

wherein

A is an alkylene group having 2 to 5 carbon atoms and optionally having a hydroxy group and/or a glycidyl group;

B is an alkylene group having 1 to 17 carbon atoms;

X indicates —O— and/or —(O)—O— linkage;

n is zero or a positive integer, and, when ni is 1 or a larger number, A and each B may indicate identical or different groups; and

R' is hydrogen or an alkyl group having 2 to 5 carbon atoms, and having a hydroxyl group and/or a glycidyl group; and

$R^2$ indicates a group selected from the group consisting of hydrogen, alkyl groups having 2 to 5 carbon atoms and $R^1$; or

b) a product of an intermolecular reaction between a compound represented by the general formula (I) and at least one of the following water-soluble comonomers: furfuryl alcohol, tetrahydrofurfuryl alcohol, epoxy compounds having 2 to 5 carbon atoms, polyethylene oxide, polyhydric alcohols having 2 to 8 carbon atoms, polybasic carboxylic acids having 2 to 17 carbon atoms, hydroxycarboxylic acids having 2 to 17 carbon atoms, formaldehyde, and mixtures thereof,

the isocyanurate structures of the aforesaid crosslinked polymers being bonded to each other via bridges with —O— and/or —C(O)—O— linkages.

2. A process as claimed in claim 1, wherein said water soluble valuable material is at least one kind of compound selected from the group consisting of organic compounds which are hydrocarbons and their derivatives containing at least one of the elements oxygen, sulfur and nitrogen, wherein the total number of atoms of carbon, hydrogen, oxygen, sulfur, and nitrogen is within the range of 7 to 30, of boric compounds, and of transition metal compounds.

3. A process as claimed in Claim 2, wherein said organic compound or compounds is at least one kind of compounds selected from the group consisting of aliphatic alcohols having 2 to 8 carbon atoms, carboxylic acids having 2 to 8 carbon atoms, aldehydes having 2 to 8 carbon atoms, ketones having 3 to 8 carbon atoms, phenols having 6 to 13 carbon atoms, amides having 1 to 8 carbon atoms, esters having 2 to 10 carbon atoms, ethers having 4 to 8 carbon atoms, amines having 2 to 10 carbon atoms, hydroxy acids having 3 to 7 carbon atoms, aprotic-polar solvents other than the above mentioned compounds, having 2 to 6 carbon atoms.

4. A process as claimed in Claim 2, wherein said transition metal compound is at least one kind of compound selected from the group consisting of Ni, Co, Fe, Cr, U, Ag, Au, Cu, Mo, W, Hg and Pt compounds which form ions or complex ions.

5. A process as claimed in Claim 2, wherein said valuable material or materials is at least one kind of compound selected from the group consisting of ethylene glycol, acetic acid, tetrahydrofuran, ethyl alcohol, phenol, ε-caprolactam and dimethylformamide.

6. A process as claimed in Claim 1, wherein the concentration of valuable materials in said aqueous solutions is within the range of 0.01 to 20 wt.pct.

7. A process as claimed in Claim 1, wherein said aqueous solutions are brackish water or sea water containing water-soluble useful materials.

8. A process as claimed in Claim 1, wherein there is provided, on the surface of the barrier layer constituting the semipermeable composite membrane, a membrane layer consisting of polyvinyl alcohol and/or partly saponified polyvinyl acetate, which has been made insoluble in water, for protection of said barrier layer.

9. A process as claimed in Claim 8, wherein the thickness of said water-insolubilized membrane layer is within the range of 0.1 to 10 μm.

10. A process as claimed in Claim 8, wherein the average degree of polymerization of polyvinyl alcohol and/or partly saponified polyvinyl acetate is from 100 to 3,000, and the degree of saponification of partly saponified polyvinyl acetate is at least 0.70.

11. A process as claimed in Claim 1, wherein the compound represented by the general formula (I) is at least one kind selected from these: 1,3,5-tris (hydroxyethyl) isocyanuric acid, bis (2-hydroxypropyl) isocyanuric acid, 1,3,5-tris (glycidyl) isocyanuric acid, and mixtures thereof.

12. A process as claimed in Claim 1, wherein the crosslinked polymer is a product of an intermolecular reaction between at least 15 wt.pct. of a compound represented by the general formula (I) and not more than 85 wt.pct. of a water-soluble comonomer.

13. A process as claimed in Claim 12, wherein the cross-linked polymer is a product of an intermolecular reaction between 20 to 80 wt.pct. of a compound represented by the general formula (I) and 80 to 20 wt.pct. of a water-soluble comonomer.

14. A process as claimed in claim 1, wherein the cross-linked polymer is a product obtained from the cross-linking of at least one of the water soluble initial condensation products and/or addition reaction products of the compounds represented by the general formula (I) or of said compounds and the comonomers according to claim 1.

15. A process as claimed in Claim 14, wherein the water-soluble initial condensation product and/or addition product is/are at least one kind or kinds selected from these: an intermolecular condensation product of 1,3,5-tris (hydroxyethyl) isocyanuric acid; an intermolecular condensation product of 1,3,5-tris (hydroxyethyl) isocyanuric acid and formaldehyde; and an addition reaction

product of 1,3,5-tris (glycidyl) isocyanuric acid and ethylene glycol.

16. A process as claimed in Claim 14, wherein the water-soluble initial condensation product and/or addition product is/are a product or products of reaction between a compound represented by the general formula (I) and expoxy compound having 2 to 5 carbon atoms, polyethylene oxide, polyhydric alcohol having 2 to 8 carbon atoms, polybasic carboxylic acid having 2 to 17 carbon atoms, hydroxycarboxylic acid having 2 to 17 carbon atoms, formaldehyde, and mixtures thereof.

17. A process as claimed in Claim 14, wherein the water-soluble initial condensation product is a product of intermolecular reaction between 1,3,5-tris (hydroxyethyl) isocyanuric acid and furfuryl alcohol.

18. A process as claimed in Claim 1, wherein the microporous supporting layer consists of polysulfone or polyvinyl chloride.

19. A process as claimed in Claim 1, wherein the thickness of the microporous supporting layer is from 30 to 1,000 µm.

20. A process as claimed in Claim 19, wherein the microporous supporting layer is reinforced or laminated with a reinforcing material selected from the group of materials including; textiles, either calendered or not calendered; nonwoven fabric; microporous film; and paper.

**Patentansprüche**

1. Verfahren zur selektiven Abtrennung wasserlöslicher, wertvoller Materialien aus ihren wäßrigen Lösungen durch reversible Osmose mit semipermeablen zusammengesetzten Membranen, die gebildet sind durch eine mikroporöse Trägerschicht und eine Sperrschicht, die auf ihrer Oberfläche gebildet ist, wobei die Sperrschicht ein vernetztes Polymer umfaßt, dessen Stärke im Bereich von 0,01 bis 0,1 µm liegt, dadurch gekennzeichnet, daß dieses vernetzte Polymer ist

(a) ein Produkt einer intermolekularen Reaktion von Verbindungen mit der Isocyanuratstruktur, dargestellt durch die folgende allgemeine Formel (I)

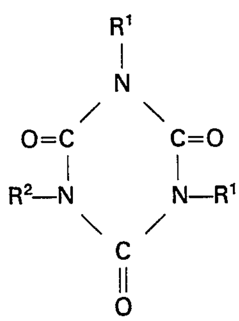

(I)

wobei

$R^1$ eine Glycidylgruppe oder eine Gruppe, dargestellt durch die folgende allgemeine Formel (II) ist:

$$—A—X—(B—X)_n—R' \quad (II)$$

worin

A eine Alkylengruppe mit 2 bis 5 Kohlenstoffatomen ist und gegebenenfalls mit einer Hydroxylgruppe und/oder einer Glycidylgruppe;

B eine Alkylengruppe mit 1 bis 17 Kohlenstoffatomen ist;

X eine —O— und/oder eine —C(O)—O— Bindung darstellt;

n 0 oder eine positive ganze Zahl ist und, wenn n1 ist oder eine größere Zahl, können A und jedes B identische oder verschiedene Gruppen darstellen; und

R' ist Wasserstoff oder eine Alkylgruppe mit 2 bis 5 Kohlenstoffatomen und mit einer Hydroxylgruppe und/oder einer Glycidylgruppe; und

$R^2$ eine Gruppe darstellt, die ausgewählt ist aus der Gruppe, die besteht aus Wasserstoff, Alkylgruppen mit 2 bis 5 Kohlenstoffatomen und $R^1$; oder

(b) ein Produkt einer intermolekularen Reaktion zwischen einer Verbindung, dargestellt durch die allgemeine Formel (I) und mindestens einem der folgenden wasserlöslichen Comonomere: Furfurylalkohol, Tetrahydrofurfurylalkohol, Epoxyverbindungen mit 2 bis 5 Kohlenstoffatomen, Polyethylenoxid, mehrwertige Alkohole mit 2 bis 8 Kohlenstoffatomen, mehrbasische Carbonsäuren mit 2 bis 17 Kohlenstoffatomen, Hydroxycarbonsäuren mit 2 bis 17 Kohlenstoffatomen, Formaldehyd und Mischungen davon,

die Isocyanuratstrukturen der oben genannten vernetzten Polymere sind dabei aneinander durch Brücken mit —O— und/oder —C(O)—O— Bindungen verbunden.

2. Verfahren nach Anspruch 1, dadurch gekennzeichnet, daß dieses wasserlösliche wertvolle Material mindestens eine Art der Verbindung ist, die aus der Gruppe ausgewählt ist, die aus organischen Verbindungen besteht, die Kohlenwasserstoffe und ihre Derivat sind, die mindestens eines der Elemente Sauerstoff, Schwefel und Stickstoff enthalten, wobei die gesamte Zahl der Atome von Kohlenstoff, Wasserstoff, Sauerstoff, Schwefel und Stickstoff im Bereich von 7 bis 30 liegt, aus Borverbindungen und aus Übergangsmetallverbindungen.

3. Verfahren nach Anspruch 2, dadurch gekennzeichnet, daß diese organische Verbindung oder Verbindungen mindestens eine Art von Verbindungen ist, die aus der Gruppe ausgewählt ist, die besteht aus: aliphatischen Alkoholen mit 2 bis 8 Kohlenstoffatomen, Carbonsäuren mit 2 bis 8 Kohlenstoffatomen, Aldehyden mit 2 bis 8 Kohlenstoffatomen, Ketonen mit 3 bis 8 Kohlenstoffatomen, Phenolen mit 6 bis 13 Kohlenstoffatomen, Amiden mit 1 bis 8 Kohlenstoffatomen, Ester mit 2 bis 10 Kohlenstoffatomen, Ether mit 4 bis 8 Kohlenstoffatomen. Aminen mit 2 bis 10 Kohlenstoffatomen, Hydroxysäuren mit 3 bis 7 Kohlenstoffatomen, aprotischen polaren Lösungsmitteln, außer den

oben genannten Verbindungen, mit 2 bis 6 Kohlenstoffatomen.

4. Verfahren nach Anspruch 2, dadurch gekennzeichnet, daß diese Übergangsmetallverbindung mindestens eine Art der Verbindung ist, die ausgewählt ist aus der Gruppe, die besteht aus Ni-, Co-, Fe-, Cr-, U-, Ag-, Au-, Cu-, Mo-, W-, Hg- und Pt-Verbindungen, die Ionen oder Komplexionen bilden.

5. Verfahren nach Anspruch 2, dadurch gekennzeichnet, daß dieses wertvolle Material oder Materialen mindestens eine Art der Verbindung ist, die ausgewählt ist aus der Gruppe, die besteht aus Ethylenglykol, Essigsäure, Tetrahydrofuran, Ethylalkohol, Phenol, ε-Caprolactam und Dimethylformamid.

6. Verfahren nach Anspruch 1, dadurch gekennzeichnet, daß die Konzentration der wertvollen Materialien in diesen wäßrigen Lösungen im Bereich von 0,01 bis 20 Gew.-% liegt.

7. Verfahren nach Anspruch 1, dadurch gekennzeichnet, daß diese wäßrigen Lösungen Brackwasser oder Meerwasser sind, die wasserlösliche wertvolle Materialien enthalten.

8. Verfahren nach Anspruch 1, dadurch gekennzeichnet, daß auf der Oberfläche der Sperrschicht, die die semipermeable zusammengesetzte Membran bildet, eine Membranschicht vorgesehen ist, die aus Polyvinylalkohol und/oder teilweise verseiftem Polyvinylacetat besteht, das in Wasser unlöslich gemacht wurde, zum Schutz dieser Sperrschicht.

9. Verfahren nach Anspruch 8, dadurch gekennzeichnet, daß die Dicke dieser wasserunlöslich gemachten Membranschicht im Bereich von 0,1 bis 10 µm liegt.

10. Verfahren nach Anspruch 8, dadurch gekennzeichnet, daß der durchschnittliche Grad der Polymerisation des Polyvinylalkohols und/oder des teilweise verseiften Polyvinylacetats von 100 bis 3000 beträgt und der Grad der Verseifung des teilweise verseiften Polyvinylacetats mindestens 0,70 ist.

11. Verfahren nach Anspruch 1, dadurch gekennzeichnet, daß die Verbindung, die durch die allgemeine Formel (I) dargestellt wird, mindestens eine Art ist, die aus diesen ausgewählt wurde: 1,3,5-Tris(hydroxyethy)isocyanursäure, Bis(2-hydroxypropyl)isocyanursäure 1,3,5-Tris(glycidyl)isocyanursäure und Mischungen davon.

12. Verfahren nach Anspruch 1, dadurch gekennzeichnet, daß das vernetzte Polymer ein Produkt einer intermolekularen Reaktion zwischen mindestens 15 Gew.-% einer Verbindung dargestellt durch die allgemeine Formel (I) und nicht mehr als 85 Gew.-% eines wasserlöslichen Comonomers ist.

13. Verfahren nach Anspruch 12, dadurch gekennzeichnet, daß das vernetzte Polymer ein Produkt einer intermolekularen Reaktion zwischen 20 bis 80 Gew.% einer Verbindung, dargestellt durch die allgemeine Formel (I) und 80 bis 20 Gew.-% eines wasserlöslichen Comonomers ist.

14. Verfahren nach Anspruch 1, dadurch gekennzeichnet, daß das vernetzte Polymer ein Produkt ist, das erhalten wird durch die Vernetzung von mindestens einem der wasserlöslichen Initialkondensationsprodukte und/oder Additionsreaktionsprodukte der Verbindungen, dargestellt durch die allgemeine Formel (I) oder von diesen Verbindungen und den Comonomeren entsprechend Anspruch 1.

15. Verfahren nach Anspruch 14, dadurch gekennzeichnet, daß das wasserlösliche Initialkondensationsprodukt und/oder Additionsprodukt ist/sind mindestens eine Art oder Arten ausgewählt aus: einem intermolekularen Kondensationsprodukt von 1,3,5-Tris(hydroxyethyl)isocyanursäure, einem intermolekularen Kondensationsprodukt von 1,3,5-Tris(hydroxyethyl) isocyanursäure und Formaldehyd, und eine Additionsreaktionsprodukt von 1,3,5-Tris-(glycidyl)isocyanursäure und Ethylenglykol.

16. Verfahren nach Anspruch 14, dadurch gekennzeichnet, daß das waserlösliche Initialkondensationsprodukt und/oder Additionsprodukt ein Produkt oder Produkte ist/sind von einer Reaktion zwischen einer Verbindung dargestellt durch die allgemeine Formel (I) und einer Epoxyverbindung mit 2 bis 5 Kohlenstoffatomen, Polyethylenoxid, mehrwertigem Alkohol mit 2 bis 8 Kohlenstoffatomen, mehrbasische Carbonsäure mit 2 bis 17 Kohlenstoffatomen, Hydroxycarbonsäure mit 2 bis 17 Kohlenstoffatomen, Formaldehyd und Mischungen davon.

17. Verfahren nach Anspruch 14, dadurch gekennzeichnet, daß das wasserlösliche Initialkondensationsprodukt ein Produkt einer intermolekularen Reaktion zwischen 1,3,5-Tris-(hydroxyethyl)isocyanursäure und Furfurylalkohol ist.

18. Verfahren nach Anspruch 1, dadurch gekennzeichnet, daß die mikroporöse Trägerschicht aus Polysulfon oder Polyvinylchlorid besteht.

19. Verfahren nach Anspruch 1, dadurch gekennzeichnet, daß die Dicke der mikroporösen Trägerschicht von 30 bis 1000 µm beträgt.

20. Verfahren nach Anspruch 19, dadurch gekennzeichnet, daß die mikroporöse Trägerschicht verstärkt oder laminiert ist mit einem verstärkenden Material ausgewählt aus der Gruppe von Materialien, die umfassen: Textilien, entweder kalandriert oder nichtkalandriert, umgewebter Textilstoff, mikroporöser Film und Papier.

**Revendications**

1. Procédé pour séparer sélectivement des matières de valeur ou précieuses solubles dans l'eau à partir de leurs solutions aqueuses par osmose inverse avec des membranes composites semi-perméables constituées par une couche de support microporeuse et une couche barrière formée à sa surface, où la couche barrière comprend un polymère réticulé dont l'épaisseur

est dans la gamme de 0,01 à 0,1 μm, caractérisé en ce que le polymère réticulé est:

a) un produit d'une réaction intermoléculaire de composés ayant la structure d'isocyanurate représentée par la formule générale suivante (I):

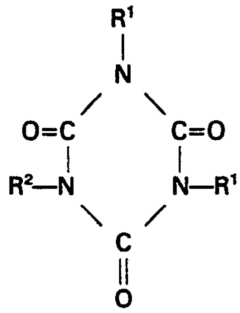

(I)

où

$R^1$ est un groupe glycidyle ou un groupe défini par la formule générale suivante (II):

$$—A—X—(B—X)_n—R' \qquad (II)$$

où

A est un groupe alkylène ayant 2 à 5 atomes de carbone et de manière facultative ayant un groupe hydroxyle et/ou un groupe glycidyle;

B est un groupe alkylène ayant 1 à 17 atomes de carbone;

X indique une liaison —O— et/ou une liaison —(O)—O—;

n est zéro ou un nombre entier positif, et, quand n vaut 1 ou un nombre plus important, A et chaque B peuvent indiquer des groupes identiques ou différents; et

R' est l'hydogène ou un groupe alkyle ayant 2 à 5 atomes de carbone, et ayant un groupe hydroxyle et/ou un groupe glycidyle; et

$R^2$ indique un groupe choisi dans le groupe se composante d'hydrogène de groupes alkyles ayant 2 à 5 atomes de carbone et de $R^1$; ou

b) un produit d'une réaction intermoléculaire entre un composé représenté par la formule générale (I) et au moins un des comonomères suivants soluble dans l'eau:l'alcool furfurylique, l'alcool tétrahydrofurfurylique, des composés époxy ayant 2 à 5 atomes de carbone, l'oxyde de polyéthylène, des alcools polyhydroxylés (polyalcools) ayant 2 à 8 atomes de carbone, des acides polycarboxyliques (polyacides) ayant 2 à 17 atomes de carbone, des acides hydroxycarboxyliques ayant 2 à 17 atomes de carbone, le formaldéhyde et leurs mélanges, les structures d'isocyanurate de ces polymères réticulés étant liés les unes aux autres par l'intermédiaire de ponts avec des liaison —O— et/ou —C(O)—O—.

2. Procédé selon la revendication 1, dans lequel in matière de valeur soluble dans l'eau est au moins un genre de composés choisis dans le groupe se composant de composés organiques qui sont des hydrocarbures et leurs dérivés, contenant au moins un des éléments oxygène, soufre et azote, où le nombre total d'atomes de carbone, d'hydrogène, d'oxygène, de soufre et d'azote est dans la gamme de 7 à 30, de composés boriques et de composés de métaux de transition.

3. Procédé selon la revendication 2, dans lequel le composé ou les composés organiques est ou sont constitués par au moins un genre de composés choisis dans le groupe se composant d'alcools aliphatiques ayant 2 à 8 atomes de carbone, d'acides carboxyliques ayant 2 à 8 atomes de carbone, d'aldéhydes ayant 2 à 8 atomes de carbone, de cétones ayant 3 à 8 atomes de carbone, de phénols ayant 6 à 13 atomes de carbone, d'amides ayant 1 à 8 atomes de carbone, d'esters ayant 2 à 10 atomes de carbone, d'éthers ayant 4 à 8 atomes de carboné d'amines ayant 2 à 10 atomes de carbone, d'hydroxyacides ayant 3 à 7 atomes de carbone, de solvants polaires neutres, autres que les composés mentionnés ci-dessus, ayant 2 à 6 atomes de carbone.

4. Procédé selon la revendication 2, dans lequel le composé de métal de transition est au moins un genre de composés choisis dans le groupe se composant de composés de Ni, de Co, de Fe, de Cr, d'U, d'Ag, d'Au, de Cu, de Mo, de W, et Hg et de Pt qui forment des ions ou des ions complexes.

5. Procédé selon la revendication 2, dans lequel la matière de valeur ou les matières de valeur est ou sont consitutées par au moins un genre de composés choises dans le groupe se composant d'éthylèneglycol, d'acide acétique, de tétrahydrofurane, d'alcool éthylique, de phénol, d'ε-caprolactame et de diméthylformamide.

6. Procédé selon la revendication 1, dans lequel la concentration de matières de valeur dans les solutions aqueuses est dans la gamme de 0,01 à 20% en poids.

7. Procédé selon la revendication 1, dans lequel les solutions aqueuses sont de l'eau saumâtre ou de l'eau de mer contenant des matières utiles solubles dans l'eau.

8. Procédé selon la revendication 1, dans lequel on prévoit à la surface de la couche barrière constituant la membrane composite ou hétérogène semi-perméable, une couche de membrane se composant d'alcool polyvinylique et/ou d'acétate de polyvinyle partiellement saponifié, qui a été rendue insoluble dans l'eau, pour la protection de la couche barrière.

9. Procédé selon la revendication 8, dans lequel l'épaisseur de la couche de membrane insolubilisée par l'eau est dans la gamme de 0,1 à 10 μm.

10. Procédé selon la revendication 8, dans lequel le degré moyen de polymérisation de l'alcool polyvinylique et/ou de l'acétate de polyvinyle saponifié est de 100 à 3000, et le degré de saponification d'acétate de polyvinyle partiellement saponifié est au moins 0,70.

11. Procédé selon la revendication 1, dans lequel le composé représenté par la formule générale (I) est au moins un genre choisi parmi les composés suivants: l'acide 1,3,5-tris(hydroxyethyl)isocyanurique, l'acide bis(2-hydroxy-

propyl)isocyanurique, l'acide 1,3,5-tris(glycidyl)isocyanurique et leurs mélanges.

12. Procédé selon la revendication 1, dans lequel le polymère réticulé est un produit d'un réaction intermoléculaire entre au moins 15% en poids d'un composé représenté par la formule générale (I) et pas plus de 85% en poids d'un comonomère soluble dans l'eau.

13. Procédé selon la revendication 12, dans lequel le polymère réticulé est un produit d'une réaction intermoléculaire entre 20 et 80% en poids d'un composé représenté par la formule générale (I) et 80 à 20% en poids d'un comonomère soluble dans l'eau.

14. Procédé selon la revendication 1, dans lequel le polymère réticulé est un produit obtenu à partir de la réticulation d'au moins un des produits de condensation initiale, solubles dans l'eau, et/ou des produits réactionnels d'addition des composés représentés par la formule générale (I) ou de ces composés et des comonomères selon la revendication 1.

15. Procédé selon la revendication 14, dans lequel le produit de condensation initial soluble dans l'eau et/ou le produit d'addition est/sont au moins un genre ou plusieurs genres choisis parmi les produits suivants: un produit de condensation intermoléculaire d'acide 1,3,5-tris(hydroxyéthyl)isocyanurique, un produit de condensation intermoléculaire d'acide 1,3,5-tris(hydroxyéthyl)-isocyanurique et de formaldéhyde, et un produit de réaction d'addition d'acide (1,3,5-tris(glycidyl)-isocyanurique et d'éthylèneglycol.

16. Procédé selon la revendication 14, dans lequel le produit de condensation initial soluble dans l'eau et/ou le produit d'addition est/sont un produit ou des produits de réaction entre un composé représenté par la formule générale (I) et un composé époxy ayant 2 à 5 atomes de carbone, de l'oxyde de polyéthylène, un alcool polyhydroxylé (polyalcool) ayant 2 à 8 atomes de carbone, un acide polycarboxylique (polyacide) ayant 2 à 17 atomes de carbone, un acide hydroxycarboxylique ayant 2 à 17 atomes de carbone, le formaldéhyde et leurs mélanges.

17. Procédé selon la revendication 14, dans lequel le produit de condensation initial soluble dans l'eau est un produit de réaction intermoléculaire entre l'acide 1,3,5-tris(hydroxyéthyl)isocyanurique et l'alcool furfurylique.

18. Procédé selon la revendication 1, dans lequel l'épaisseur de la couche de support microporeuse se compose de polysulfone ou de chlorure de polyvinyle.

19. Procédé selon la revendication 1, dans lequel l'épaisseur de la couche de support microporeuse est comprise entre 30 et 1000 µm.

20. Procédé selon la revendication 19, dans lequel la couche de support microporeuse est renforcée ou stratifiée avec une matière de renforcement choisie dans le groupe de matières comprenant: des textiles, calandrés ou non calandrés, un tissu non tissé, un film microporeux et du papier.